# EUROPEAN PATENT APPLICATION

(11) **EP 4 365 013 A1**
(43) Date of publication of application: **08.05.2024**
(21) Application number: 23207629.9
(22) Date of filing: 03.11.2023
(51) Int. Cl.: B60L 53/62, B60L 53/66

(54) **METHOD AND APPARATUS FOR OPTIMAL TIMED CHARGING**

(30) Priority: 07.11.2022 US 202217981808
(71) Applicant: Volvo Car Corporation, 405 31 Göteborg (SE)
(72) Inventor: Ropel, Andreas, 405 31 Göteborg (SE); Lloyd, Ben, 405 31 Göteborg (SE); Le Saux, Mathias, 405 31 Göteborg (SE); Chatziioannou, Kostas, 405 31 Göteborg (SE); Persson Signell, Klas, 405 31 Göteborg (SE)
(74) Representative: Nederlandsch Octrooibureau

(57) **Abstract**

Embodiments relate to systems (100) for optimal timed charging. The system (100) comprises a charging system (102) comprising a charging circuitry (106) and a monitoring circuitry (108), coupled to the battery pack (104) that is configured to transmit a charging time to a charging station; transmit the state-of-health of the battery pack (104) to the charging station; determine a rate of charge based on the state-of-health of the battery pack (104); and supply power for the charging time at the rate of charge, by the charging station; wherein the battery pack (104) is maximally charged within the charging time at the rate of charge.

## Description

### FIELD OF THE INVENTION

The present application relates generally to a charging system for an electric vehicle, and more particularly, to a method and system for optimal timed charging of an electric vehicle.

### BACKGROUND

Systems and methods exist for charging plug-in electric vehicles. Separate systems exist to charge the electric vehicle from the power grid, wireless source, or electric charge storage. The drawback of the available charging systems is that they do not have the capability to provide a maximum charge during the allotted time. For many electric vehicle (EV) users, recharging their EV as quickly as possible is important, and these users select the fastest charging option whenever possible even when a slower charging option may be more economical, more efficient, and/or better for the battery pack.

Therefore, there is a need for a system and method for optimal timed charging of an electric vehicle and maximum charging during the allotted time without damaging the battery pack.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

One or more embodiments described herein, present systems, vehicles, devices, computer-implemented methods, methods, apparatus, computer program products, and/or non-transitory computer readable mediums are presented that facilitate optimal timed charging of an electric vehicle.

According to one or more embodiments, the system comprises a charging system that comprises a charging circuitry coupled to a battery pack and a monitoring circuitry coupled to the battery pack to measure a state-of-health of the battery pack; and a control unit that is configured to: receive a charging time; retrieve the state-of-health of the battery pack; determine a rate of charge based on the state-of-health of the battery pack; and transmit a power supply request to a charging station with the charging time and the rate of charge; and receive a charge for the charging time at the rate of charge, by the charging station; and wherein the battery pack is maximally charged in the charging time at the rate of charge.

According to one or more embodiments, the vehicle comprises a charging system comprising a charging circuitry coupled to a battery pack, a monitoring circuitry coupled to the battery pack, and a control unit; and a vehicle computer system which, when under power, is configured to receive a charging time, to retrieve a state-of-health of the battery pack, to determine a rate of charge based on the state-of-health of the battery pack, and to transmit a power supply request to a charging station with the charging time and the rate of charge, and to receive a charge for the charging time at the rate of charge by the charging station; wherein the battery pack is maximally charged within the charging time at the rate of charge.

According to one or more embodiments, the method comprises receiving a charging time by a vehicle computer system of a vehicle, retrieving a state-of-health of a battery pack of the vehicle, determining a rate of charge based on the state-of-health of the battery pack, transmitting a power supply request to a charging station with the charging time and the rate of charge, and receiving a charge for the charging time at the rate of charge from the charging station; wherein the battery pack is maximally charged within the charging time at the rate of charge; wherein the state-of-health of the battery pack remains unaffected due to the rate of charge.

According to one or more embodiments, the non-transitory storage medium stores a sequence of instructions, which when executed by a processor cause receiving a charging time by a vehicle computer system of a vehicle, retrieving a state-of-health of the battery pack, determining a rate of charge based on the state-of-health of the battery pack, transmitting a power supply request to a charging station with the charging time and the rate of charge, and receiving a charge for the charging time at the rate of charge from the charging station; wherein the battery pack is maximally charged within the charging time at the rate of charge; wherein the state-of-health of the battery pack remains unaffected due to the rate of charge.

According to one or more embodiments, the system is configured to receive a software application installation package over a computer network; and install the software application onto a computing hardware associated with a vehicle; wherein the software application comprises: set of instructions executable by the computing hardware and stored in a non-transitory storage medium that, when executed, cause the computing hardware to implement operations comprising: receiving, by a charging system of a vehicle, a charging time via a vehicle computer system; retrieving, by the charging system, a state-of-health of a battery pack of the vehicle; determining, by the charging system, a rate of charge based on the state-of-health of the battery pack; transmitting, by the charging system, a power supply request to a charging station with the charging time and the rate of charge; and receiving, by the charging system, a charge for the charging time at the rate of charge from the charging station; and wherein the battery pack is maximally charged within the charging time at the rate of charge; and wherein the state-of-health of the battery pack remains unaffected due to the rate of charge.

According to one or more embodiments, the computer-implemented charging method for a charging system, the method comprising: receiving a charging time; retrieving a history of previous charging; determining a state-of-health and a state-of-charge of the battery pack; determining a charging pattern to be adopted for charging the battery pack in the charging time; splitting the charging time into a charge interval based on the charging pattern; transmitting the charging time, the charging pattern, and the charge interval to a charging station; and receiving a power based on the charging pattern for the charge interval in the charging time.

According to one or more embodiments, the computer-implemented charging method for a charging system, the method comprising: receiving a charging time; retrieving a state-of-health of a battery pack; determining a charging sequence based on the charging time and the state-of-health; and determining an amount of power to provide a maximum charge to the battery pack during the charging time, wherein the state-of-health comprises a first state-of-health that corresponds to a first portion of the battery pack, a second state-of-health that corresponds to a second portion of the battery pack, and a third state-of-health that corresponds to a third portion of the battery pack.

### BRIEF DESCRIPTION OF THE FIGURES

These and other aspects of the present invention will now be described in more detail, with reference to the appended drawings showing exemplary embodiments of the present invention, in which:
**FIG. 1** depicts a block diagram of a system for charge planning, in one or more embodiments.
**FIG. 2** depicts a block diagram of a system for charge planning comprising an artificial intelligence unit, in one or more embodiments.
**FIG. 3** provides a schematic view of charge planning by a vehicle comprising a system for charge planning, and a picture view of the components that can interact for an EV charge including interactions to alter charging plan or alter a charging scheme during an EV charge, in one or more embodiments.
**FIG. 4** depicts a vehicle comprising a charging system, in one or more embodiments.
**FIG. 5A** depicts a workflow for charge planning by a system for charge planning, in one or more embodiments.
**FIG. 5B** illustrates a non-transitory storage medium that stores instructions to perform charge planning, according to an embodiment.
**FIG. 5C** illustrates a system configured for installation of a software application for charge planning, via a software installation package provided over a computer network, according to an embodiment.
**FIG. 6** provides an example message sent by the system of a vehicle to a charging station, in one or more embodiments.
**FIG. 7** provides a charge planning scheme adopted by a system for charge planning, in one or more embodiments.
**FIG. 8** depicts a workflow for a charge planning comprising multiple level charging, by a system for charge planning, in one or more embodiments.
**FIG. 9** provides a charge planning scheme by mapping a battery portion by a system for charge planning, in one or more embodiments.
**FIG. 10** provides a charge planning scheme by mapping a primary battery pack and other additional battery packs by a system for charge planning, in one or more embodiments.
**FIG. 11** schematically shows a battery and a battery management system, according to one or more embodiments.
**FIG. 12** depicts a workflow for a charge planning for mapped portions of a battery, by a system for charge planning, in one or more embodiments.
**FIG. 13A** shows a structure of the neural network / machine learning model with a feedback loop.
**FIG. 13B** shows a structure of the neural network / machine learning model with reinforcement learning.

### DETAILED DESCRIPTION

### Definitions and general techniques

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same elements.

Although the herein detailed description contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

The articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

The terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

The terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

The terms "left," "right," "front," "back," "top," "bottom," "over," "under," and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more". Where only one item is intended, the term "one" or similar language is used. Also, the terms "has," "have," "having," or the like are open-ended terms. Further, the phrase "based on" means "based, at least in part, on" unless explicitly stated otherwise.

The terms "system," "device," "unit," and/or "module" refer to a different component, component portion, or component of the various levels of the order. However, other expressions that achieve the same purpose may replace the terms.

The terms "couple," "coupled," "couples," "coupling," and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

The term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

Two or more elements or modules are "integral" or "integrated" if they operate functionally together. Two or more elements are "non-integral" if each element can operate functionally independently.

The term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

As used herein, the term component broadly construes hardware, firmware, and/or a combination of hardware, firmware, and software.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of a digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship to each other.

Embodiments of the present invention may comprise or utilize a special purpose or general-purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

A "network" refers to one or more data links that enable the transport of electronic data between computer systems and/or modules and/or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and/or modules and/or other electronic devices.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general-purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store," "storage," "data store," "data storage," "database," and any other information storage component relevant to operation and functionality of a component refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random-access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

The following terms and phrases, unless otherwise indicated, shall be understood to have the following meanings.

The term "vehicle" as used herein refers to a thing used for transporting people or goods. Automobiles, cars, trucks, or buses etc. are examples of vehicles.

The term "electric vehicle (EV)" as used herein refers to a vehicle , powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

The term "plug-in electric vehicle (PEV)" as used herein refers to an Electric Vehicle that recharges the on-vehicle primary battery by connecting to the power grid.

The term "plug-in vehicle (PV)" as used herein refers to an electric vehicle rechargeable through wireless charging from an electric vehicle supply equipment (EVSE) without using a physical plug or a physical socket.

The term "heavy duty vehicle (HD Vehicle)" as used herein refers to any four- or more wheeled vehicle as defined in 49 CFR 523.6 or 49 CFR 37.3 (bus).

The term "light duty plug-in electric vehicle" as used herein refers to a three or four-wheeled vehicle propelled by an electric motor drawing current from a rechargeable storage battery or other energy devices for use primarily on public streets, roads and highways and rated at less than 4, 545 kg gross vehicle weight.

The term "autonomous mode" as used herein refers to an operating mode which is independent and unsupervised.

The term "autonomous vehicle" also referred to as self-driving vehicle, driverless vehicle, robotic vehicle used herein refers to a vehicle incorporating vehicular automation, that is, a ground vehicle that can sense its environment and move safely with little or no human input. Self-driving vehicles combine a variety of sensors to perceive their surroundings, such as thermographic cameras, radio detection and ranging (radar), light detection and ranging (lidar), sound navigation and ranging (sonar), global positioning system (GPS), odometry and inertial measurement unit. Control systems designed for the purpose, interpret sensor information to identify appropriate navigation paths, as well as obstacles and relevant signage.

The term "level 1 charging" refers to a charging that uses a 120-207 volt. Every electric vehicle or plug-in hybrid can be charged on level 1 charging by plugging the charging equipment into a regular wall outlet. Level 1 charging may be the slowest way to charge an EV. Level 1 charging generally adds between 3 and 5 miles of range per hour.

The term "level 2 charging" refers to a charge that uses 208- 240 volt. Level 2 charging is most commonly used for daily EV charging. Level 2 charging equipment can be installed at home, at the workplace, as well as in public locations like shopping plazas, train stations and other destinations. Level 2 charging can replenish between 12 and 80 miles of range per hour, depending on the power output of the Level 2 charger, and the vehicle's maximum charge rate.

The term "level 3 charging" refers to a charging that uses 400-Volt to 900-Volt DC. Level 3 charging is the fastest type of charging available and can recharge the EV at a rate of 3 to 20 miles of range per minute. Unlike Level 1 charging and Level 2 charging that uses alternating current (AC), Level 3 charging uses direct current (DC).

The term "artificial intelligence unit" refers to any system that perceives its environment and takes actions that maximize its chance of achieving its goals. Artificial intelligence unit utilizes a plurality of Machine learning algorithms that allow systems to automatically improve through experience.

As used herein "machine learning" refers to algorithms that give a computer the ability to learn without explicit programming, including algorithms that learn from and make predictions about data. Machine learning algorithms include, but are not limited to, decision tree learning, artificial neural networks (ANN) (also referred to herein as a "neural net"), deep learning neural network, support vector machines, rule-based machine learning, random forest, etc. For the purposes of clarity, algorithms such as linear regression or logistic regression can be part of a machine learning process. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. Statistical modeling relies on finding relationships between variables (e.g., mathematical equations) to predict an outcome.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is a datum.

The term "energy source" as used herein refers to the electrical and mechanical equipment and their interconnections necessary to generate or convert power.

The term "AC" as used herein refers to alternating current.

The term "DC" as used herein refers to direct current.

The term "wired connection" as used herein refers to a connection using physical cables to connect between the devices.

The term "wireless connection" as used herein refers to electrical connection between two or more points that do not use an electrical conductor as a medium.

The term "power grid" as used herein refers to a network, usually of a power company, for transmitting and distributing electric power.

The term "circuit" as used herein refers to an arrangement of interconnected components that has at least one input and one output terminal, and whose purpose is to produce at the output terminals a signal that is a function of the signal at the input terminals.

The term "processor" as used herein refers to a device that interprets and executes instructions, consisting of at least an instruction control unit and an arithmetic unit that contains a central processing unit.

The term "battery management system (BMS)" as used herein refers to a system that is used to monitor and control power storage systems, assure health of battery cells, and deliver power to vehicle systems. Isolation products have numerous uses inside BMS in the electrical domains of Electric Vehicles (EV) or Hybrid Electric Vehicles (HEV).

The term "degraded cells" as used herein refers to energy storage cells where the physical and chemical changes have occurred. The degraded cells can store or deliver energy less than the actual capacity.

The term "healthy cells" as used herein refers to energy storage cells which can store or deliver energy equal to the actual capacity.

The term "moderate degraded cells" as used herein refers to energy storage cells which can store or deliver energy less than the actual capacity but equal to a threshold capacity.

The term "control unit" or "control module" or "electronic control unit" refers to a functional unit in a computer system that controls one or more units of the peripheral equipment. For example, it may be a component of a charging system that provides instructions or signals to the charger unit to charge the battery pack as per the charging requirement. In another example, it may be a component of a charging station that provides instructions or signals to the charger unit to charge the battery pack as per the charging requirement.

The term "battery pack" as used herein refers to a set of any number of identical batteries or individual cells of a battery. The "battery pack" may also refer to a set of non-identical batteries. The configuration of batteries in the battery pack may be configured in a series, parallel or a combination of both to deliver the desired voltage, capacity, and/or power density.

The term "charging station" as used herein refers to a location that includes at least one docking terminal with a charger for charging a battery pack. The term "charging station," as used further refers to an apparatus that can function as a source of power for charging the battery pack of an electric vehicle including facilitating data communications between the electric vehicle and the charging station. The communications may be established through a wired connection or a wireless connection. The charging station is also capable of charging the electric vehicle either through a wired connection or a wireless connection.

The term "charging system" as used refers to an apparatus that is capable of charging a battery pack. The charging system is capable of monitoring and controlling the battery pack. The charging system is also capable of calculating and monitoring battery parameters (e.g., battery impedance, battery resistance, battery temperature, state-of-charge, state-of-health, etc.). The charging system is communicatively coupled to a vehicle computer system. The charging system is also communicatively coupled to the charging station.

The term "vehicle computer system" refers to an embedded system in automotive electronics that controls one or more of the electrical systems or subsystems in a vehicle. The computer executes a large number of different software functions in the powertrain, chassis, driver assistance, and infotainment domains, etc. that are executed on separate control units. The vehicle computer system may be communicatively coupled with an external device of a user. The vehicle computer system may also be communicatively coupled with the charging station.

The term "infotainment system" or "in-vehicle infotainment system" (IVI) as used herein refers to a combination of systems that deliver entertainment and information. In an example, the information may be delivered to the driver and the passengers of a vehicle through audio/ video interfaces, control elements like touch screen displays, button panel, voice commands, and more. Some of the main components of an in-vehicle infotainment systems are an integrated head-unit, a heads-up display, a high-end Digital Signal Processors (DSPs), and a Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "charging sequence" as used refers to a charging pattern defined by the charging system or the charging station based on the battery parameters (e.g., state-of-health) and charging time. The charging sequence may comprise a charging level for a predefined charging time segment. The charging sequence may also comprise a charging level for a predefined portion (e.g., healthy cells, degraded cells )of the battery pack. The charging level may comprise a regular charging, a fast charging, and a trickle charging.

The terms "maximum charging," "maximum charge," or "optimally charging" as used refers to a maximum charging rate of the battery pack during the charging time without damaging the battery pack.

The term "charging time" as used herein refers to a time allotted for charging. The charging time may be provided by the user. The charging station or the charging system may also determine the charging time.. The charging time may be split into charging time segments. Each charging time segment may correspond to a different charging level. Each charging time segment may correspond to charging the different portion of the battery pack.

The term "user" as used herein includes driver and/or passenger of a vehicle.

The term "state-of-health (SoH)" refers to a figure of merit of the condition of a battery pack, compared to its ideal conditions. The state-of-health (SoH) of a battery pack describes the difference between a battery pack being studied and a fresh battery pack and considers cell aging. The SoH is the ratio of the maximum battery charge to its rated capacity. SoH is represented in percentage form.

The term "trickle charging" refers to charging a battery pack continuously or periodically with a very small current. The trickle charge also refers to a continuous, slow charge applied to the battery pack.

The term "fast charging" refers to charging a battery pack faster than regular charging.

The term "regular charging" refers to charging a battery pack by supplying a standard charging voltage employed according to the capacity of the battery pack.

**Technical problem:** The problem is that when the user wants to charge for a short time and not until the battery is optimally charged (e.g., full or until a recommended threshold is reached), the user just plugs in the charger and unplugs it when they return. However, there needs to be a system that allows the user to provide the amount of desired time for charging and a system that maximizes charging during the allotted time (e.g., user provided length of time).

**Technical solution:** In an aspect, an optimal charging system is provided that allows a vehicle to transmit a charging time to a connected charger. Upon receiving the charging time, the charger can optimize charge (e.g., determine rate of charging based on SoH received from the vehicle) and charge the battery for requested time. Thus, a user can provide a length of time to charge and simply plug-in the charging connector or initiate wireless charging. The car would optimally charge according to time requested and stop after the time has expired. The charging station can optimally ramp up charging while preventing damage to battery or its cells while providing maximum charge during the allotted time.

In an aspect, a system is described herein. The system comprises a charging system that comprises a charging circuitry coupled to a battery pack and a monitoring circuitry coupled to the battery pack to measure a state-of-health of the battery pack; and a control unit that is configured to: receive a charging time; retrieve the state-of-health of the battery pack; determine a rate of charge based on the state-of-health of the battery pack; transmit, a power supply request to a charging station with the charging time and the rate of charge; and receive a charge for the charging time at the rate of charge, by the charging station; and wherein the battery pack is maximally charged within the charging time at the rate of charge.

In an embodiment, the charging circuitry comprises a wired charging circuitry. In another embodiment, the wired charging circuitry comprises a plug-in connector. In yet another embodiment, power is supplied to the charging system from the charging station via the plug-in connector. In yet another embodiment, the charging circuitry comprises a wireless charging circuitry. In yet another embodiment, the wireless charging circuitry comprises: a first wiring path that bypasses the battery pack and establishes a direct path for transferring AC originated power for charging the battery pack of an electrified vehicle; a second wiring path electrically connected to the battery pack and that establishes a direct path for transferring DC power for charging the battery pack; and a transformer/converter housed inside a housing and configured to convert AC power from a grid power source to DC power for charging a plurality of battery cells of the battery pack. In yet another embodiment, the battery pack comprises a plurality of cells for storing energy. In yet another embodiment, the battery pack comprises an auxiliary battery. In yet another embodiment, the auxiliary battery provides electricity to power vehicle accessories. In yet another embodiment, the charging time is provided by a user via an external device. In yet another embodiment, the monitoring circuitry comprises a state-of-charge sensor and a state-of-health sensor. In yet another embodiment, the control unit is configured to determine an amount of power to prevent damage to the battery pack and to provide the maximum charge to the battery pack during the charging time. In yet another embodiment, the control unit is configured to receive the state-of-health of the battery pack from the monitoring circuitry. In yet another embodiment, the control unit is connected to a vehicle computer system.

In an embodiment, the vehicle computer system is configured to receive the charging time from an external device. In some embodiments, the external device comprises a handheld device of the vehicle passenger. In another embodiment, the charging time is provided by a user via an external device.

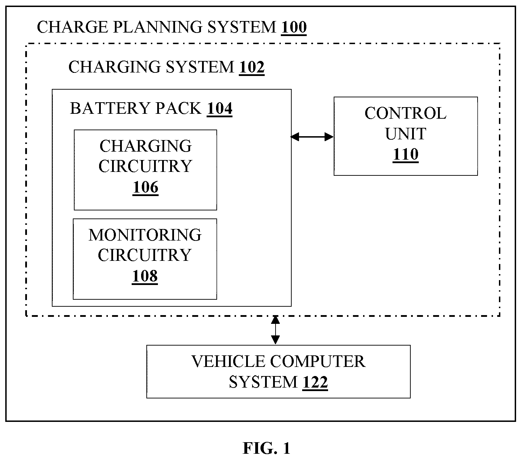

Referring to **FIG. 1****,** the figure depicts a block diagram of a system for charge planning, in one or more embodiments. The system comprises a charge planning system 100 and a vehicle computer system 122. The charge planning system 100 further comprises a charging system 102 comprising a battery pack 104 and a control unit 110. The battery pack 104 further comprises a charging circuitry 106 and a monitoring circuitry 108.

In an embodiment, the charging time may be provided by the user as the input to the vehicle computer system 122 via an external device (e.g., a mobile, a computer, a laptop, a desktop, a tablet, a smart watch, and a personal digital assistant). In an embodiment, the charging time may be split and provided as charging time segments by the user. In an embodiment, the charging time comprises a combination of at least one of a first charging time segment, a second charging time segment, and a third charging time segment.

In an embodiment, the vehicle computer system further comprises an artificial intelligence unit. In another embodiment, the artificial intelligence unit is configured to determine the charging time based on the state-of-health of the battery pack via the vehicle computer system. As used herein "second charging time" is the charging time recommended by the artificial intelligence unit and "second rate of charge" is the rate of charge recommended by the artificial intelligence unit.

In yet another embodiment, the artificial intelligence unit is configured to receive data from the monitoring circuitry; analyze the state-of-health of the battery pack; predict an effect of the rate of charge during charging on the state-of-health the battery pack; and communicate a recommendation of a second charging time and a second rate of charge to the control unit based on the state-of-health. In yet another embodiment, the artificial intelligence unit is configured to recommend the second charging time to a user through the vehicle computer system. In yet another embodiment, the artificial intelligence unit is configured to recommend the second charging time to a user through an external device. In yet another embodiment, the artificial intelligence unit is configured to receive data from the charging circuitry; analyze the state-of-charge of the battery pack; estimate a charging time and a rate of charge that is innocuous for the battery pack; and communicate a recommendation of the second charging time and second rate of charge to the user. In yet another embodiment, the artificial intelligence unit is configured to determine the charging time based on the state-of-health of the battery pack via a vehicle computer system. In yet another embodiment, the artificial intelligence unit is configured to recommend the second charging time to a user through the vehicle computer system.

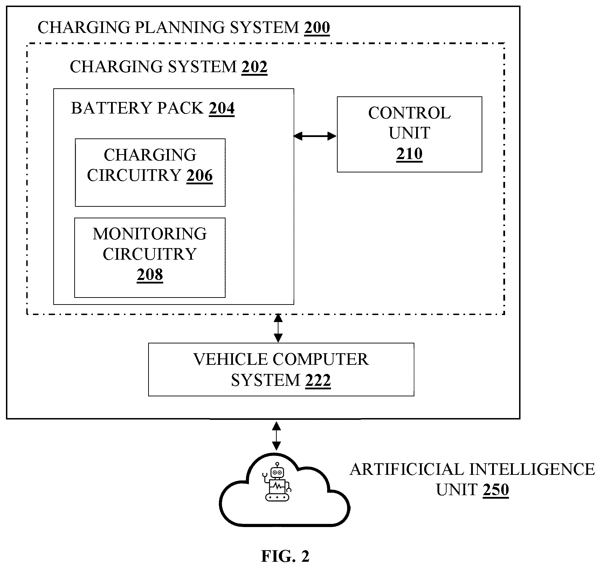

Referring to **FIG. 2****,** the figure depicts a block diagram of a system for charge planning comprising an artificial intelligence unit, in one or more embodiments. The system comprises a charge planning system 200, an artificial intelligence unit 250 and a vehicle computer system 222. The charge planning system 200 further comprises a charging system 202 comprising a battery pack 204 and a control unit 210. The battery pack 204 further comprises a charging circuitry 206 and a monitoring circuitry 208. The vehicle computer system 222, via the artificial intelligence unit 250, recommends the charging sequence based on correlating the charging time and the state-of-health of the battery pack with a previous history of the battery pack. The artificial intelligence unit 250 may comprise a machine learning algorithm. The artificial intelligence unit 250 analyzes the message comprising the charging time and the state-of-health of the battery pack. The artificial intelligence unit 250 correlates the charging time and the state-of-health of the battery pack with a previous history of the battery pack. The artificial intelligence unit 250 then communicates a recommendation of the charging sequence to the control unit based on the analysis.

In an embodiment, the artificial intelligence unit 250 is configured to analyze the message comprising the charging time and the state-of-health of the battery pack. The artificial intelligence unit 250 correlates the charging time and the state-of-health of the battery pack with a previous history of the battery pack. The artificial intelligence unit 250 communicates a recommendation of the charging sequence to the control unit based on the analysis. In another embodiment, the previous history of the battery pack comprises a plurality of charging time of the battery, a plurality of state-of-health of the battery pack and a plurality of charging sequence that the battery pack has undergone charging.

In another embodiment, the vehicle computer system 222, via the artificial intelligence unit, automatically splits the charging time into charging time segments based on the state-of-health and the charging time. In yet another embodiment, the vehicle computer system 222, via the artificial intelligence unit, automatically recommends the charging time segments based on the state-of-health and the charging time to the user via the vehicle computer system. The user may then approve the recommendation through the vehicle computer system.

In another embodiment, the user may provide the input as voice input. The vehicle computer system 222 via the artificial intelligence unit 250 analyzes the voice input. The artificial intelligence unit 250 may comprise a machine learning unit. The vehicle computer system 222 may also comprise a natural language processing unit to analyze and learn the voice input. As an example, consider the user has provided the voice input as "Coffee" via the external device or the vehicle computer system. The vehicle computer system may communicate the voice input to the artificial intelligence unit 250. The artificial intelligence unit, via the natural language processing unit, analyzes the voice input and determines the time needed for that event (i.e., having a coffee). The artificial intelligence unit 250 provides the determined time as the charging time to the vehicle computer system. The artificial intelligence unit 250 compares and matches the voice input with previous voice inputs. Based on the comparison, the artificial intelligence unit 250 determines the charging time. In an embodiment, the natural language processing unit can analyze and determine the charging time from the voice input provided in a multilingual format.

As another example, consider the user has provided the voice input as "Lunch" via the external device or the vehicle computer system. The vehicle computer system may communicate the voice input to the artificial intelligence unit 250. The artificial intelligence unit, via the natural language processing unit, analyzes the voice input and determines the time needed for that event (i.e., having lunch). The artificial intelligence unit 250 compares and matches the voice input with previous voice input. Based on the comparison, the artificial intelligence unit 250 determines the charging time. In an embodiment, the artificial intelligent unit also determines a nearby restaurant by communicating with a database. The artificial intelligence unit 250 extracts the list of nearby restaurants from a database and determines the appropriate nearby restaurant based on the location of the electric vehicle and/or the external device. Based on the appropriate restaurant determined, the artificial intelligence unit 250 may modify the determined time. For example, in a restaurant like Burger King^{®}, the time for having lunch (e.g., Burger) is 5 minutes, whereas the time for having lunch (e.g., an Indian meal) in an Indian Restaurant is 25 minutes. The artificial intelligence unit 250 may determine the charging time based not only on the voice input but also the surrounding circumstances (e.g., location, event, time, availability of services in that location, traffic, etc.) of the user.

In another embodiment, the vehicle computer system determines the charging time based on a travel itinerary of the user. The user, while planning the travel, may allot time for food and beverages as well as for relaxation. The user may prepare the travel itinerary. The artificial intelligence unit 250 may extract the allotted time from the travel itinerary and may provide an allotted time as the charging time to the vehicle computer system. In yet another embodiment, the artificial intelligence unit 250 determines the charging time based on a travel itinerary of the user. The artificial intelligence unit 250 may retrieve the travel itinerary from the vehicle computer system and determine the allotted time (e.g., the time for food and beverages and/or relaxation) as the charging time.

In an embodiment, the artificial intelligence unit uses data flow graphs by sorting through data layers called nodes to make decisions based on rules and output statistics and predictive analysis using a large dataset of labeled and unlabeled data in an artificial intelligence unit library. Large sets of algorithms allow for improved deep learning, overall performance, accuracy, and speed. The artificial intelligence unit running the RNN models support machine learning algorithms such as classification, regression, and clustering.

In an embodiment, a high-performance AI engine based on RNN can constantly analyze and compare both large numerical datasets of available labeled and unlabeled data based on usage data generated by the charging system.

In an embodiment, a neural network is a computational system that creates predictions based on existing data. A neural network consists of: (1) input layers that take inputs based on existing data, (2) hidden layers that use backpropagation to optimize the weights of the input variables to improve the predictive accuracy of the model, and (3) output layers that are the output of predictions based on the analyzed data from the input and hidden layers.

In an embodiment, deep learning approach begins with generating optimal algorithms at a completely random and ground level. The learning data is characterized to include a multitude of the developed fundamental algorithms. Most of the algorithms can be individually insufficient and sparse and individually seem limited and therefore some code can be found to be better than the rest. These pieces are then to be collectively used in the deep learning model. As new sets of algorithms get generated, that are continuously trialed, and this process keeps repeating until such an optimal set of algorithms are found that is better than anything else at solving the problem and thereby output the most desirable optimal analysis.

In another aspect, a vehicle is described herein. The vehicle comprises a charging system comprising a charging circuitry coupled to a battery pack, a monitoring circuitry coupled to the battery pack, and a control unit; and the vehicle comprises a vehicle computer system that, when under power, is configured to receive a charging time, retrieve a state-of-health of the battery pack, determine a rate of charge based on the state-of-health of the battery pack, transmit, a power supply request to a charging station with the charging time and the rate of charge, and receive a charge for the charging time at the rate of charge by the charging station; and wherein the battery pack is maximally charged within the charging time at the rate of charge. In another embodiment, the vehicle receives a charge via one or more means comprising an emergency charging vehicle system, an aerial vehicle charging system, a roadway system, a robotic charging system, and an overhead charging system. In another embodiment, the vehicle computer system engages with elements within the vehicle comprising a vehicle driver, a vehicle passenger, a charging station server, and a vehicle database. In yet another embodiment, the vehicle database is remotely located. In yet another embodiment, the vehicle database resides physically in the vehicle. In yet another embodiment, the vehicle operates autonomously. In yet another embodiment, the vehicle operates semi-autonomously in an autonomous environment. In yet another embodiment, the vehicle computer system engages with an artificial intelligence unit, which may provide charging recommendations for charge planning. In yet another embodiment, the artificial intelligence unit is configured to determine the charging time based on the state-of-health of the battery pack via the vehicle computer system. In yet another embodiment, the artificial intelligence unit is configured to recommend the charging time to the vehicle driver through the vehicle computer system. In yet another embodiment, the artificial intelligence unit is configured to recommend the charging time to the vehicle passenger through the vehicle computer system. In yet another embodiment, the artificial intelligence unit is in the cloud. In yet another embodiment, the vehicle computer system communicates with an external device.

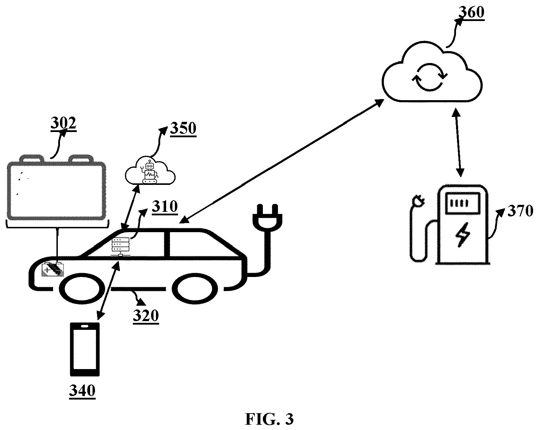

Referring to **FIG. 3****,** the figure provides a schematic view of charge planning by a vehicle comprising a system for charge planning, in one or more embodiments. The vehicle computer system 310 may receive an update of the charging time via an external device 340. In an embodiment, the vehicle computer system 310 determines the update to the charging time based on a distance between a location of the external device 340 (e.g., mobile phone, handset, personal digital assistant (PDA), laptop, tablet, etc.) and the charging station 370. The charging system 302, upon receiving the update to the charging time and the state-of-health, may modify the charging sequence. The charging system 302 may modify the charging process based on the modified charging sequence and send an instruction to the charging system via the internet 360 or Bluetooth.

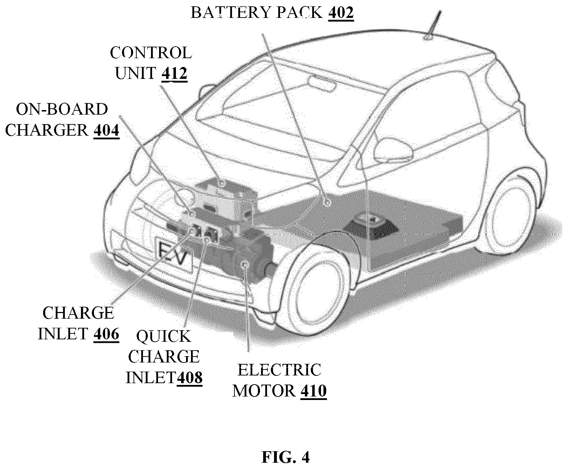

Referring to **FIG. 4****,** the figure depicts a vehicle comprising a charging system, in one or more embodiments. In an embodiment the charging system further comprises a battery pack 402, an on-board charger 404, a charge inlet 406, a quick charge inlet 408 and an electric motor 410 connected with a charging circuitry of the battery pack 402. In an embodiment, the charging circuitry can automatically change based on instruction provided by the control unit 412 to the electric motor 410.

In yet another aspect, a method is described herein. The method comprises receiving a charging time by a vehicle computer system of a vehicle; retrieving a state-of-health of a battery pack of the vehicle; determining a rate of charge based on the state-of-health of the battery pack; transmitting a power supply request to a charging station with the charging time and the rate of charge; and receiving a charge for the charging time at the rate of charge from the charging station; wherein the battery pack is maximally charged within the charging time at the rate of charge; and wherein the state-of-health of the battery pack remains unaffected due to the rate of charge. In an embodiment, power is supplied to the charging system from the charging station using wireless charging. In another embodiment, power is supplied to the charging system from the charging station via a plug-in connector. In yet another embodiment, power is supplied to the charging system when the vehicle is at standstill.

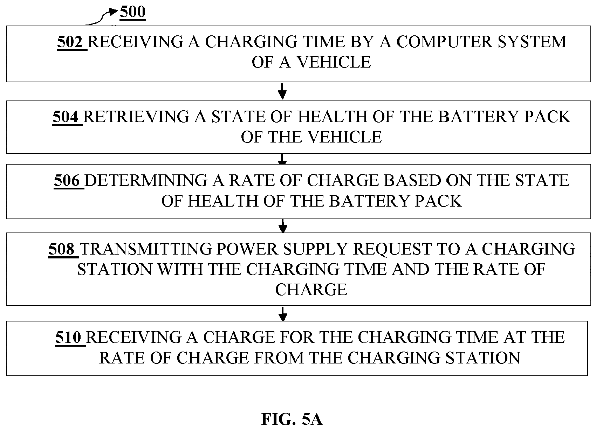

Referring to **FIG. 5A****,** the figure depicts a workflow for charge planning by a system, in one or more embodiments. The charge planning process 500 comprises the following steps:
At step 502, charge planning process 500 comprise receiving a charging time by a computer system of a vehicle.
At step 504, charge planning process 500 further comprise retrieving a state-of-health of the battery pack of the vehicle.
At step 506, charge planning process 500 further comprise determining a rate of charge based on the state-of-health of the battery pack.
At step 508, charge planning process 500 further comprise transmitting a power supply request to a charging station with the charging time and the rate of charge.
At step 510, charge planning process 500 further comprise receiving a charge for the charging time at the rate of charge from the charging station.
The battery pack is maximally charged within the charging time at the rate of charge.

In yet another aspect, a non-transitory storage medium is described herein. The non-transitory storage medium storing a sequence of instructions, which when executed by a processor cause: receiving a charging time by a vehicle computer system of a vehicle; retrieving a state-of-health of the battery pack; determining a rate of charge based on the state-of-health of the battery pack; transmitting a power supply request to a charging station with the charging time and the rate of charge; and receiving a charge for the charging time at the rate of charge from the charging station; wherein the battery pack is maximally charged within the charging time at the rate of charge; and wherein the state-of-health of the battery pack remains unaffected due to the rate of charge.

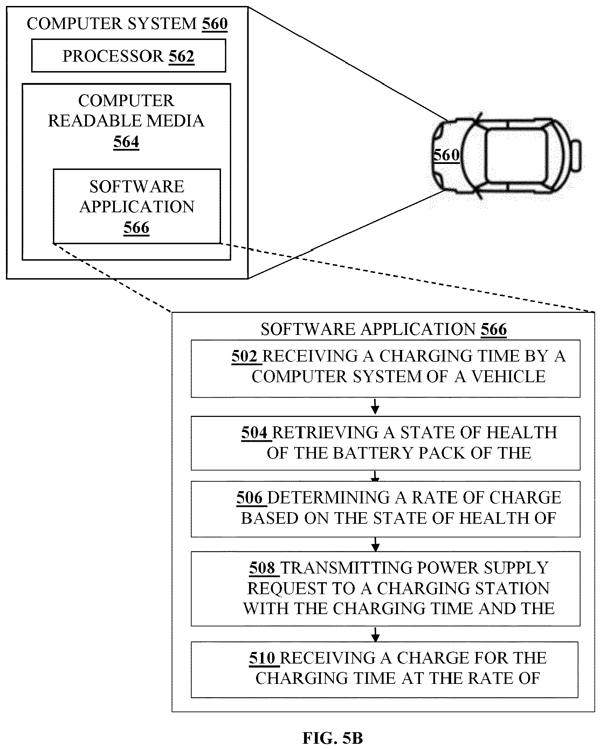

Referring to **FIG. 5B****,** the figure illustrates a non-transitory storage medium that stores instructions to perform charge planning, according to an embodiment. The non-transitory storage medium 500b comprises software applications 566 stored thereon in a computer readable media 564. A processor 562 can process the software application 566 and causes the vehicle computer system 560 to perform operations comprising steps 502 to step 510 of FIG. 5A.

According to one or more embodiments, the system is configured to receive a software application installation package over a computer network; and install the software application onto a computing hardware associated with a vehicle; wherein the software application comprises: set of instructions executable by the computing hardware and stored in a non-transitory storage medium that, when executed, cause the computing hardware to implement operations comprising: receiving, by a charging system of a vehicle, a charging time via a vehicle computer system; retrieving, by the charging system, a state-of-health of a battery pack of the vehicle; determining, by the charging system, a rate of charge based on the state-of-health of the battery pack; transmitting, by the charging system, a power supply request to a charging station with the charging time and the rate of charge; and receiving, by the charging system, a charge for the charging time at the rate of charge from the charging station; and wherein the battery pack is maximally charged within the charging time at the rate of charge; and wherein the state-of-health of the battery pack remains unaffected due to the rate of charge.

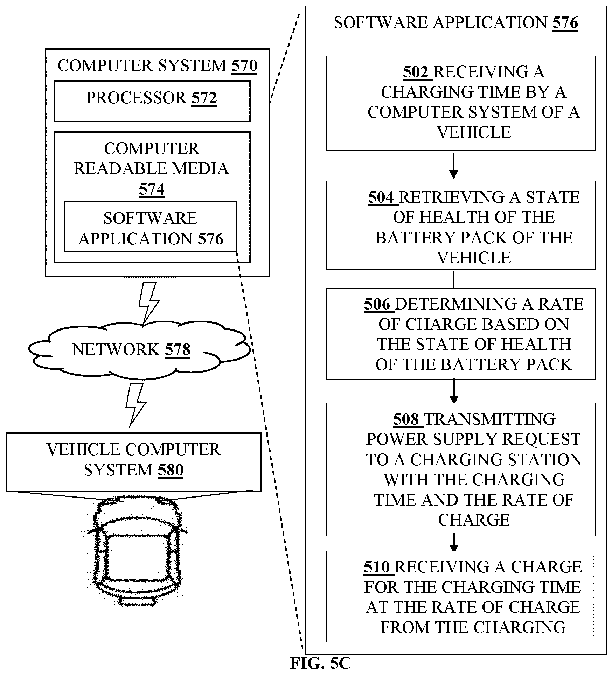

Referring to **FIG. 5C****,** the figure illustrates a system configured for installation of a software application for charge planning, via a software installation package provided over a computer network, according to an embodiment. The system 500c comprises a computer system 570 comprising a processor 572 and a computer readable medium 574 , the computer readable medium 574 further comprising a software application 576 for charge planning and connected via network 578 with a vehicle computer system 580. The software application comprises a set of instructions executable by computing hardware and stored in a non-transitory storage medium of FIG. 5B when executed, causes the computing hardware to implement operations comprising steps 502 to step 510 of FIG. 5A.

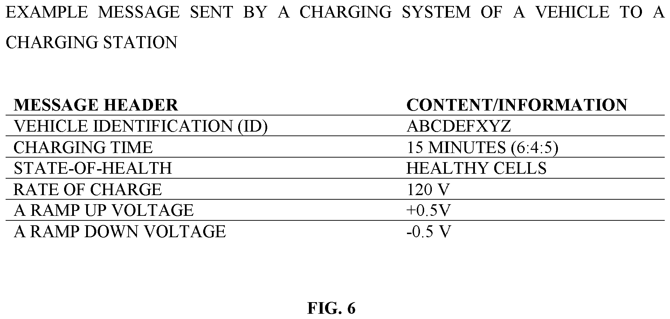

Referring to **FIG. 6****,** the figure provides an example message sent by the system of a vehicle to a charging station, in one or more embodiments. In some embodiments, the charging system may communicate a charging instruction to the charging station. In some embodiments, the message may be provided via a wired connection. In some embodiments, the message may be provided via a wireless connection. In an example, the message may comprise a charging time, a state-of-health, a rate of charge, a ramp up voltage and a ramp down voltage.

In another aspect, another system is described herein. The system comprising a charging system that comprises a charging circuitry coupled to a battery pack and a monitoring circuitry coupled to the battery pack to measure a state-of-health of the battery pack; and a control unit that is configured to: receive a charging time; retrieve a history of previous charging; determine the state-of-health and the state-of-charge of the battery pack; determine a charging pattern to be adopted for charging the battery pack in the charging time; split the charging time into a charge interval based on the charging pattern; transmit the charging time, the charging pattern, and the charge interval to a charging station; and receive, a power based on the charging pattern for the charge interval in the charging time. In an embodiment, the battery pack is maximally charged in the charging time. In another embodiment, the charging pattern prevents damage to the battery pack. In yet another embodiment, the charging pattern comprises a level 1 charging, a level 2 charging, and a level 3 charging. In yet another embodiment, the level 1 charging comprises a voltage range from 120-Volt to 208-Volt. In yet another embodiment, the level 2 charging comprises a voltage range from 208-Volt to 240-Volt. In yet another embodiment, the level 3 charging comprises a voltage range from 400-Volt to 900-Volt.

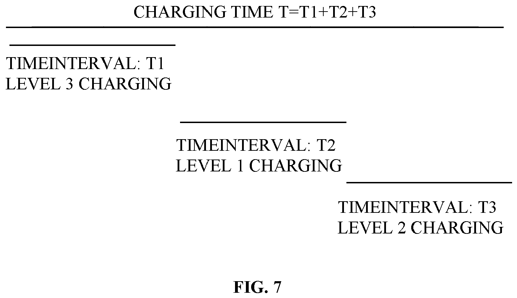

Referring to **FIG. 7****,** the figure provides a charge planning scheme adopted by a system for charge planning, in one or more embodiments. In some embodiments, if multiple charge facilities are available by a charging system, the allotted charging time T may be split into multiple time intervals. In an example, the allotted charging time T is split into a time interval T1, a time interval T2, and a time interval T3. The system may recommend a charging level selected from charging level 1, charging level 2, and charging level 3 to the plurality of time intervals. In an example the T1 is assigned level 3 charging, T2 is assigned Level 1 charging and T3 is assigned a level 2 charging as depicted in FIG. 7.

In another aspect, a vehicle is described herein. The vehicle comprises a charging system comprising a charging circuitry coupled to a battery pack, a monitoring circuitry coupled to the battery pack, and a control unit, and a vehicle computer system which, when under power, is configured to: receive a charging time; retrieve a history of previous charging; determine a state-of-health and a state-of-charge of the battery pack; determine a charging pattern to be adopted for charging the battery pack in the charging time; split the charging time into a charge interval based on the charging pattern; transmit the charging time, the charging pattern, and the charge interval to a charging station; and receive power based on the charging pattern for the charge interval in the charging time.

In yet another aspect, a computer-implemented charging method is described herein. The computer-implemented charging method for a charging system, the method comprising: receiving a charging time; retrieving a history of previous charging; determining a state-of-health and a state-of-charge of the battery pack; determining a charging pattern to be adopted for charging the battery pack in the charging time; splitting the charging time into a charge interval based on the charging pattern; transmitting the charging time, the charging pattern, and the charge interval to a charging station; and receiving power based on the charging pattern for the charge interval in the charging time.

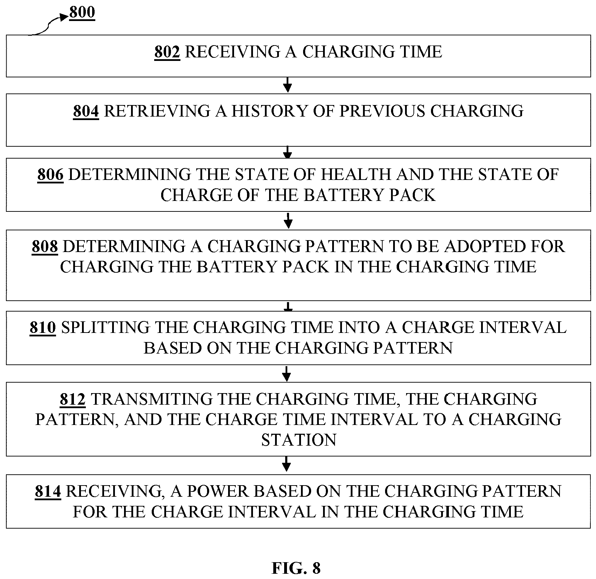

Referring to **FIG. 8****,** the figure depicts a workflow for a charge planning comprising multiple level charging, by a system for charge planning, in one or more embodiments. The charge planning process 800 comprises the following steps, charge planning process 800 further comprise
At step 802, the charge planning process 800 comprises receiving a charging time by a computer system of a vehicle.
At step 804, the charge planning process 800 comprises retrieving a history of previous charging.
At step 806, charge planning process 800 further comprise determining the state-of-health and the state-of-charge of the battery pack of the vehicle.
At step 808, charge planning process 800 further comprise determining a charging pattern to be adopted for charging the battery pack in the charging time based on the state-of-health of the battery pack.
At step 810, the charge planning process 800 comprises splitting the charging time into a charge interval based on the charging pattern.
At step 812, charge planning process 800 further comprise transmitting the charging time, the charging pattern, and the charge time interval to a charging station.
At step 814, charge planning process 800 further comprise receiving a charge (power) for the charging time at the rate of charge from the charging station.
The battery pack is maximally charged within the charging time by utilizing the charging pattern.

In yet another aspect, another non-transitory storage medium is described herein. The non-transitory computer readable medium includes instructions stored thereon that when processed by at least one processor causes a charging system associated with a vehicle to perform operations comprising: receiving a charging time; retrieving a history of previous charging; determining a state-of-health and the state-of-charge of the battery pack; determining a charging pattern to be adopted for charging the battery pack in the charging time; splitting the charging time into a charge interval based on the charging pattern; transmitting the charging time, the charging pattern, and the charge interval to a charging station; and receiving power based on the charging pattern for the charge interval in the charging time.

In another aspect, another system is described herein. The system comprising a charging system that comprises a charging circuitry coupled to a battery pack and a monitoring circuitry coupled to the battery pack to measure a state-of-health of the battery pack, and a control unit that is configured to: receive a charging time; retrieve a state-of-health of the battery pack; determine a charging sequence based on the charging time and the state-of-health; and determine an amount of power to provide a maximum charge to the battery pack during the charging time; wherein the state-of-health comprises a first state-of-health that corresponds to a first portion of the battery pack, a second state-of-health that corresponds to a second portion of the battery pack, and a third state-of-health that corresponds to a third portion of the battery pack.

In an embodiment, the control unit is connected to a vehicle computer system. In another embodiment, the vehicle computer system is configured to receive the charging time from an external device. In yet another embodiment, the vehicle computer system engages with an artificial intelligence unit, which may provide charging recommendations for charge planning. In yet another embodiment, the artificial intelligence unit is configured to analyze a message comprising the charging time and the state-of-health of the battery pack; correlate the charging time and the state-of-health of the battery pack with a previous history of the battery pack; and communicate a recommendation of charging sequence to the control unit based on the message. In yet another embodiment, previous history of the battery pack comprises a plurality of charging times of the battery pack, a plurality of state-of-health of the battery pack and a plurality of charging sequences since the battery pack has undergone multiple charging. In yet another embodiment, the control unit is configured to communicate a signal to a charger unit to supply the amount of power determined. In yet another embodiment, the charging sequence comprises a combination of at least one of a level 1 charging, a level 2 charging, and a level 3 charging. In yet another embodiment, the charging sequence comprises a combination of at least one of a level 1 charging that corresponds to the first portion of the battery pack, a level 2 charging that corresponds to the second portion of the battery pack, and a level 3 charging that corresponds to the third portion of the battery pack. In yet another embodiment, the level 1 charging comprises a trickle charging. In yet another embodiment, the level 2 charging comprises a regular charging. In yet another embodiment, the level 3 charging comprises a fast charging. In yet another embodiment, the battery pack comprises a plurality of cells. In yet another embodiment, the first portion of the battery pack comprises a first plurality of cells among the plurality of cells of the battery pack. In yet another embodiment, the second portion of the battery pack comprises a second plurality of cells among the plurality of cells of the battery pack. In yet another embodiment, the third portion of the battery pack comprises a third plurality of cells among the plurality of cells of the battery pack.

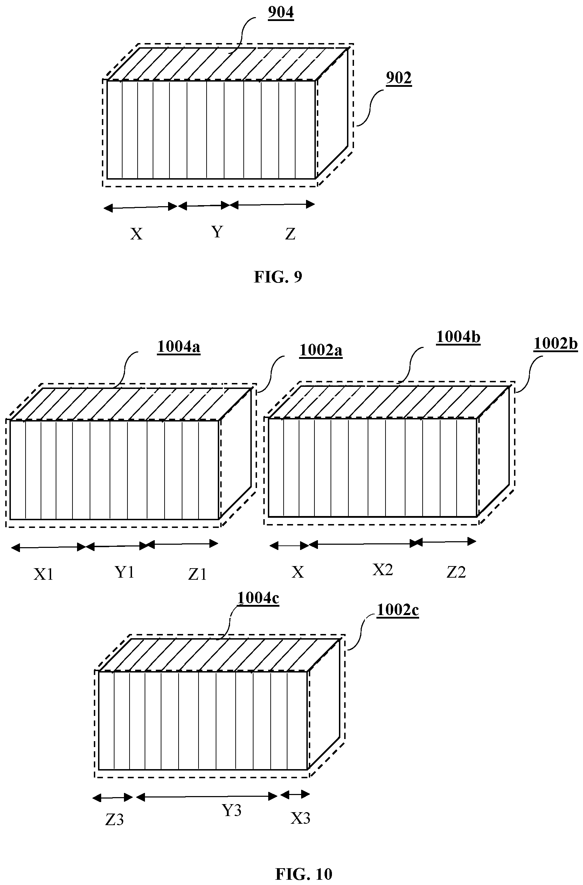

Referring to **FIG. 9****,** the figure provides a charge planning scheme by mapping a battery pack portion by a system for charge planning, in one or more embodiments. The battery pack 902 herein comprises an individual battery. The battery comprises a plurality of cells 904. The battery pack comprises a first portion X, a second portion Y, and a third portion Z. The first portion X may comprise a first plurality of cells among the plurality of cells of the battery. The second portion Y may comprise a second plurality of cells among the plurality of cells of the battery. The third portion Z may comprise a third plurality of cells among the plurality of cells of the battery.

The first portion X, the second portion Y, and the third portion Z may be categorized based on the state-of-health of the respective portions. The first portion X may comprise a first state-of-health. The second portion Y may comprise a second state-of-health. The third portion Z may comprise a third state-of-health. In an embodiment, the first portion may refer to a portion of the battery having degraded cells. The second portion may refer to a portion of the battery having healthy cells. The third portion may refer to a portion of the battery having moderate degraded cells.

In an embodiment, the battery pack comprises at least one of a first battery, a second battery, and a third battery. In another embodiment, the first battery comprises a primary battery. In yet another embodiment, the second battery comprises a secondary battery. In yet another embodiment, the third battery comprises a tertiary battery. In yet another embodiment, the first portion of the battery pack comprises a plurality of first cells from a combination of at least one of the first battery, the second battery, and the third battery. In yet another embodiment, the charging time comprises a combination of at least one of a first charging time segment, a second charging time segment, and a third charging time segment. In yet another embodiment, the control unit is configured to determine the amount of power to prevent damage to the battery pack and to provide the maximum charge to the battery pack during the charging time. In yet another embodiment, the control unit is configured to receive a message comprising the charging time and the state-of-health of the battery pack from a vehicle computer system. In yet another embodiment, the control unit is configured to receive the charging time from an external device. In yet another embodiment, the artificial intelligence unit is configured to determine the charging time based on the state-of-health of the battery pack via a vehicle computer system. In yet another embodiment, the artificial intelligence unit is configured to recommend the second charging time to a user through the vehicle computer system. In yet another embodiment, the artificial intelligence unit is configured to recommend the second charging time to a user through an external device. In yet another embodiment, the charging sequence comprises a combination of at least one of a level 1 charging that corresponds to the first charging time segment, a level 2 charging that corresponds to the second charging time segment, and a level 3 charging that corresponds to the third charging time segment.

Referring to **FIG. 10****,** the provides a charge planning scheme by mapping a primary battery pack and other additional battery packs by a system for charge planning, in one or more embodiments. The battery pack herein comprises a first battery 1002a, a second battery 1002b, and a third battery 1002c. The first battery 1002a, the second battery 1002b, and the third battery 1002c may be identical batteries. The first battery 1002a, the second battery 1002b, and the third battery 1002c may be non-identical batteries. In an embodiment, each battery of the battery pack may comprise equal capacity to store and deliver power. In another embodiment, each battery of the battery pack may comprise a different capacity to store and deliver power.

The first battery 1002a may comprise a plurality of first cells 1004a. The second battery 1002b may comprise a plurality of second cells 1004b. The third battery 1002c may comprise a plurality of third cells 1004c. Each battery of the battery pack is connected electrically to get charged by the charging station. The charging station based on the instructions provided by the charging system may charge each battery of the battery pack through one of randomly, serially, and parallelly.

The charging station may charge at least one of a first portion X, a second portion X, and a third portion Z of the battery pack. The first portion X of the battery pack refers to degraded cells from each battery of the battery pack (X= X1+X2+X3). The second portion Y of the battery pack refers to healthy cells from each battery of the battery pack (Y= Y1+Y2+Y3). The third portion Z of the battery pack refers to moderate degraded cells from each battery of the battery pack (Z= Z 1+Z2+Z3). Healthy cells may be contiguously or non-contiguously located within the same battery. Similarly, degraded and moderately degraded cells may be contiguously or non-contiguously located within the same battery.

The charging system is configured to map the battery pack based on the state-of-health. In an embodiment, the charging system maps at least one of the degraded cells, the healthy cells, and the moderate degraded cells of the battery pack. The charging system, upon performing mapping the battery pack, determines the charging sequence based on the state-of-health and the charging time. The charging system may assign the charging sequence to a particular portion of the battery pack. In an embodiment, the charging system assigns the charging sequence to only the healthy cells and the moderate degraded cells of the battery pack. The charging system may ignore charging the degraded cells.

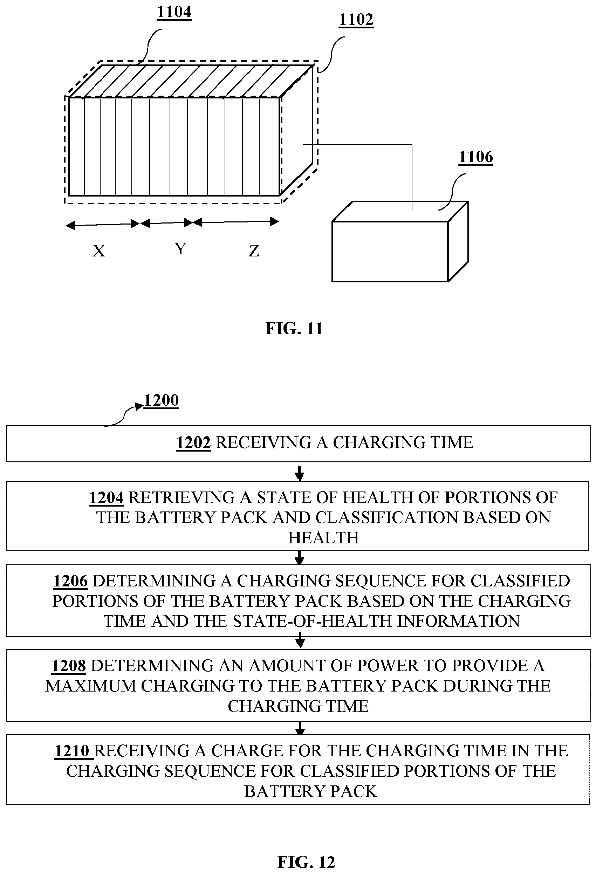

Referring to **FIG. 11****,** the figure schematically shows a battery and a battery management system, according to one or more embodiments. The battery 1102 comprises a plurality of cells 1104. The battery management system 1106 may include a microprocessor, microcontroller, programmable digital signal processor, or another programmable device. The battery management system 1106 may also or alternatively comprise an application specific integrated circuit, a programmable gate array or programmable array logic, a programmable logic device or a digital signal processor. Where the battery management system 1106 comprises a programmable device such as the microprocessor, microcontroller or programmable digital signal processor mentioned above, the processor may also comprise computer executable code which controls the operation of the programmable device. In an embodiment, the battery management system 1106 resides within an electric vehicle. The battery management system 1106 determines the state-of-health (SoH) of the battery pack and communicates to the vehicle computer system.

In an embodiment, the battery management system 1106 is configured to: measure a first battery property and a battery temperature of a battery in the electric vehicle; calculating the state-of-health (SoH) of the battery cell for the determined battery attributes using a predetermined model_{calc}(ii) a Providing a function f for estimating the cell degradation rate; updating the state-of-health estimated in the previous time step according to:

SoHₑₛₜ←SoHₑₛₜ+f·dt+K·(SoH_{calc}-SoHₑₛₜ)

where K is a gain factor that depends on the operating conditions of the vehicle, and where K is modified using a reinforcement learning agent for each time step.

In another embodiment, the battery management system 1106 estimates State-of-health (SOH) characteristics of a battery pack in a hybrid vehicle. The estimation of the SOH includes charging and discharging the battery pack at least one time within an upper region of a State-of-charge (SOC) window. In this case, the battery pack is charged to a first predetermined level in the upper region of the SOC window during a first time period. The battery pack is then charged by a first charge current impulse for pushing the SOC level of the battery pack to a level above the first predetermined level and outside the SOC window, during a second time period. The battery pack is then discharged by an electrical machine to a second predetermined level within the SOC window.

The estimation of the SOH further includes charging and discharging the battery pack at least one time within a lower region of the SOC window. In this case, the battery pack is charged to a third predetermined level in the SOC window, during a third time period. The battery pack is then discharged by an electrical machine to a fourth predetermined level in the SOC window. The battery pack is then discharged by a second current impulse, for pushing the SOC level of the battery pack to a level below the fourth predetermined level and below the SOC window, during a fourth time period.

The estimation of the SOH further includes: calibrating by the battery management system 1206 comprised in the hybrid vehicle by using the reached levels outside the SOC window for determining correct upper and lower edges of the current soc window; and estimating the SOH characteristics of the battery pack during the charge and discharge periods by using the battery management system 1206 for determining the condition of the battery pack in comparison to a new and unused battery pack by comparing the current SOC window with a standard SOC window. In an embodiment, the first and third time period is longer than the second and fourth time period, respectively. In another embodiment, the first predetermined level represents a higher voltage, than the second predetermined level and the third predetermined level represents a higher voltage, than the fourth predetermined level.

In another aspect, a vehicle is described herein. The vehicle comprises: a charging system comprising a charging circuitry, coupled to a battery pack, a monitoring circuitry, coupled to the battery pack, and a control unit; and a vehicle computer system which, when under power, is configured to: receive a charging time; retrieve a state-of-health of the battery pack; determine a charging sequence based on the charging time and the state-of-health; and determine an amount of power to provide a maximum charge to the battery pack during the charging time, wherein the state-of-health comprises a first state-of-health that corresponds to a first portion of the battery pack, a second state-of-health that corresponds to a second portion of the battery pack, and a third state-of-health that corresponds to a third portion of the battery pack.

In yet another aspect, a computer-implemented charging method is described herein. The computer-implemented charging method for a charging system, the method comprising: receiving a charging time; retrieving a state-of-health of a battery pack; determining a charging sequence based on the charging time and the state-of-health; and determining an amount of power to provide a maximum charge to the battery pack during the charging time, wherein the state-of-health comprises a first state-of-health that corresponds to a first portion of the battery pack, a second state-of-health that corresponds to a second portion of the battery pack, and a third state-of-health that corresponds to a third portion of the battery pack.

Referring to **FIG. 12****,** the figure depicts a workflow for a charge planning for the mapped portions of a battery, by the system for charge planning, in one or more embodiments. The charge planning process 1200 comprises the following steps:
At step 1202, charge planning process 1200 comprise receiving a charging time by a computer system of a vehicle.
At step 1204, charge planning process 1200 further comprise retrieving a state-of-health and a state-of-charge of portions of the battery pack and classification based on health of the vehicle.
At step 1206, charge planning process 1200 further comprise determining a charging sequence for classified portions of the battery pack based on the charging time and the state-of-health.
At step 1208, charge planning process 1200 further comprise determining an amount of power to provide a maximum charge to the battery pack during the charging time.
At step 1210, charge planning process 1200 further comprise receiving a charge for the charging time in the charging sequence for classified portions of the battery pack.
The battery pack is maximally charged within the charging time at the rate of charge.

In an embodiment, the artificial intelligence unit of the system may comprise a machine learning model that is capable of adaptive learning. The neural net model is trained with an initial set of training data. Partial products of the trained model are stored. When new training data are available, the trained model is updated by using the stored partial products and the new training data to compute weights for the updated model.

The charge planning process further comprises analyzing a message comprising the charging time and the state-of-health of the battery pack; correlating the charging time and the state-of-health of the battery pack with a previous history of the battery pack; and communicating a recommendation of a charging sequence to a control unit of the charging system based on the message.

In an embodiment, the previous history of the battery pack comprises a plurality of charging time of the battery pack, a plurality of state-of-health of the battery pack and a plurality of charging sequence that the battery pack has undergone charging. In another embodiment, the method further comprises communicating a signal to a charger unit to supply the amount of power determined. In yet another embodiment, the process further comprises determining the charging time to fully charge the battery pack based on the state-of-health of the battery pack via the vehicle computer system.

In an embodiment, the charging sequence comprises a combination of at least one of a level 1 charging, a level 2 charging, and a level 3 charging. In another embodiment, the charging sequence comprises a combination of at least one of a level 1 charging that corresponds to the first portion of the battery pack, a level 2 charging that corresponds to the second portion of the battery pack, and a level 3 charging that corresponds to the third portion of the battery pack. In yet another embodiment, the level 1 charging comprises a trickle charging. In yet another embodiment, the level 2 charging comprises a regular charging. In yet another embodiment, the level 3 charging comprises a fast charging. In yet another embodiment, the battery pack comprises a plurality of cells. In yet another embodiment, the first portion of the battery pack comprises a first plurality of cells among the plurality of cells of the battery pack. In yet another embodiment, the second portion of the battery pack comprises a second plurality of cells among the plurality of cells of the battery pack. In yet another embodiment, the third portion of the battery pack comprises a third plurality of cells among the plurality of cells of the battery pack. In yet another embodiment, the battery pack comprises at least one of a first battery, a second battery, and a third battery. In yet another embodiment, the first battery comprises a primary battery. In yet another embodiment, the second battery comprises a secondary battery. In yet another embodiment, the third battery comprises a tertiary battery. In yet another embodiment, the first portion of the battery pack comprises a plurality of first cells from a combination of at least one of the first battery, the second battery, and the third battery. In yet another embodiment, the charging time comprises a combination of at least one of a first charging time segment, a second charging time segment, and a third charging time segment. In yet another embodiment, a vehicle computer system is providing the charging time and the state-of-health of the battery pack. In yet another embodiment, an external device provides the charging time. In yet another embodiment, the charging sequence comprises a combination of at least one of a level 1 charging that corresponds to the first charging time segment, a level 2 charging that corresponds to the second charging time segment, and a level 3 charging that corresponds to the third charging time segment.

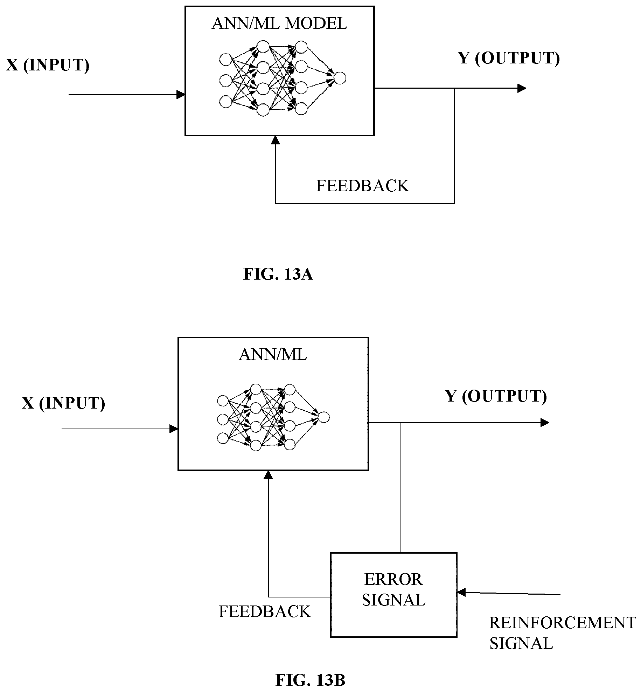

**FIG. 13A** shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data (e.g., message received by the charging station or the charging system), make a prediction on that input data, and then provide a response. The model may learn from the data. Learning can be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect or determine at least one of a charge consumption rate, a change in state of health of charging system, change in driving pattern, or change in driving mode, a required charging sequence to maintain a state of charge, a modified charging sequence, an update to charging time, an update to state-of-health information, amount of power etc. based on the input data. The input data may comprise one or more of a battery consumption rate, environmental factors affecting the battery performance, change in route, weather condition, road condition, traffic condition, a driving pattern, and a driving mode.

In an embodiment, ANN's may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an AI model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labeled data and concepts, after a while, the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/ML model is trained, a few labeled samples comprising both positive and negative examples of the concepts (for e.g., charging rate, charging pattern, charging sequences, amount of power, etc.) are used that are meant for the model to learn. Afterward, the model is tested using unlabeled data. By using, for example, deep learning and neural networks, the model can then make predictions on whether the desired concept/s (for e.g., charging rate, charging pattern, charging sequences, amount of power, etc.) are in unlabeled images. Each image is given a probability score where higher scores represent a higher level of confidence in the models' predictions. Where a model gives an image a high probability score, it is auto labeled with the predicted concept. However, in the cases where the model returns a low probability score, this input may be sent to a controller (may be a human moderator) which verifies and, as necessary, corrects the result. The human moderator may be used only in exceptional cases. The feedback loop feeds labeled data, auto-labeled or controller-verified, back to the model dynamically and is used as training data so that the system can improve its predictions in real-time and dynamically.

**FIG. 13B** shows a structure of the neural network / machine learning model with reinforcement learning. The network receives feedback from authorized networked environments. Though the system is similar to supervised learning, the feedback obtained in this case is evaluative not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

In an embodiment, icons on a graphical user interface (GUI) or display of the infotainment system of a computer system are re-arranged based on a priority score of the content of the message. The processor tracks the messages that need to be displayed at a given time and generates a priority score, wherein the priority score is determined based on the action that needs to be taken by the user, the time available before the user input is needed, content of the message to be displayed, criticality of the user's input/action that needs to be taken, the sequence of the message or messages that need to be displayed and executed, and the safety of the overall scenario. For example, in case of determining a charging sequence, the messages in queue for displaying could be a charging sequence, a charging time segment, a charging level type, a modified charging sequence, amount of power, establishment of communication link, etc. In all these messages that need a user's attention, a priority score is provided based on the actions that need to be taken by the user, the time available for the user to receive the displayed message and react with an action, the content of the message, criticality of the user's input/action, sequence of the messages that need to be executed, and safety of the overall scenario. Considering the above example, the message that intimates the user that a determined charging sequence may be of higher priority as compared to intimating establishment of communication link. Therefore, the charging sequence takes priority and takes such a place on the display (example, center of the display) which can grab the users' attention immediately. The priority of the messages is evaluated dynamically as the situation is evolving and thus the display icons, positions, and sizes of the text or icon on the display are changed in real-time and dynamically. In an embodiment, more than one message is displayed and highlighted as per the situation and the user's actions. Further, while charging, if the charging time is updated for example, a modified charging sequence is determined, the message dynamically changes and intimates the user about the modified charging sequence.

In yet another aspect, another non-transitory storage medium is described herein. The another non-transitory computer readable medium including instructions stored thereon that when processed by at least one processor causes a charging system associated with a vehicle to perform operations comprising: receiving a charging time; retrieving a state-of-health of a battery pack of the vehicle; determining a charging sequence based on the charging time and the state-of-health; and determining an amount of power to provide a maximum charge to the battery pack during the charging time, wherein the state-of-health comprises a first state-of-health that corresponds to a first portion of the battery pack, a second state-of-health that corresponds to a second portion of the battery pack, and a third state-of-health that corresponds to a third portion of the battery pack.

## Claims

1. A system (100) comprising:
a charging system (102) that comprises a charging circuitry (106) coupled to a battery pack (104) and a monitoring circuitry (108) coupled to the battery pack (104) to measure a state-of-health of the battery pack (104); and a control unit (110) that is configured to:
receive a first charging time;
retrieve the state-of-health of the battery pack;
determine a first rate of charge based on the state-of-health of the battery pack;
transmit, a power supply request to a charging station with the first charging time and the first rate of charge;
and receive a charge for the first charging time at the first rate of charge, by the charging station; and
wherein the battery pack is maximally charged within the first charging time at the first rate of charge.

2. The system (100) of any one of the preceding claims, wherein the first charging time is provided via an external device.

3. The system (100) of any one of the preceding claims, wherein the control unit (110) is configured to determine an amount of power to prevent damage to the battery pack (104) and to provide a maximum charge to the battery pack (104) during the first charging time.

4. The system (100) of any one of the preceding claims, wherein the control unit (110) is configured to receive the state-of-health of the battery pack (104) from the monitoring circuitry (108).

5. The system (100) of any one of the preceding claims, wherein the control unit (110) is connected to a vehicle computer system (122) wherein the vehicle computer system (122) is configured to receive the first charging time from an external device.

6. The system (100) of any one of the preceding claims, wherein the vehicle computer system (122) further comprises an artificial intelligence unit (250) that is configured to determine a second charging time based on the state-of-health of the battery pack (104) via the vehicle computer system (122).

7. The system (100) of any one of the preceding claims, wherein the artificial intelligence unit (250) is configured to:
receive data from the monitoring circuitry;
analyze the state-of-health of the battery pack;
predict an effect of the first rate of charge for the first charging time on the state-of-health the battery pack; and
communicate a recommendation of the second charging time and a second rate of charge to the control unit based on the effect.

8. The system (100) of any one of the preceding claims, wherein the artificial intelligence unit (250) is configured to recommend the second charging time through an external device.

9. The system (100) of any one of the preceding claims, wherein the artificial intelligence unit (250) is configured to:
receive data from the charging circuitry (106);
analyze a state-of-charge of the battery pack (104);
estimate the second charging time and a second rate of charge that is innocuous for the battery pack (104); and
communicate a recommendation of the second charging time and the second rate of charge to the control unit (110) based on the state-of-charge.

10. The system (100) of any one of the preceding claims, wherein the artificial intelligence unit (250) is configured to determine the second charging time based on the state-of-health of the battery pack (104) via the vehicle computer system (122).

11. The system (100) of any one of the preceding claims, wherein the artificial intelligence unit (250) is configured to recommend the second charging time through the vehicle computer system (122).

12. A method (500) comprising:
receiving a first charging time by a vehicle computer system of a vehicle (502);
retrieving a state-of-health of a battery pack of the vehicle (504);
determining a first rate of charge based on the state-of-health of the battery pack (506);
transmitting, a power supply request to a charging station with the first charging time and the first rate of charge (508); and
receiving a charge for the first charging time at the first rate of charge from the charging station (510);
wherein the battery pack is maximally charged within the first charging time at the first rate of charge; and
wherein the state-of-health of the battery pack remains unaffected due to the first rate of charge.

13. The method of claim 12, further comprising:
receiving, by an artificial intelligence unit, health related data from a monitoring circuitry attached to the battery pack;
analyzing, by the artificial intelligence unit, the state-of-health of the battery pack;
predicting, by the artificial intelligence unit, an effect of the first rate of charge for the first charging time on the state-of-health the battery pack; and
communicating, by the artificial intelligence unit, a recommendation of a second charging time and a second rate of charge to a control unit of the vehicle based on the state-of-health.

14. The method of claims 12 to 13, further comprising:
receiving, by an artificial intelligence unit, charge related data from a charging circuitry attached to the battery pack;
analyzing, by the artificial intelligence unit, a state-of-charge of the battery pack;
estimating, by the artificial intelligence unit, a second charging time and a second rate of charge that is innocuous for the battery pack; and
communicating, by the artificial intelligence unit, a recommendation of the second charging time and the second rate of charge to a control unit of the vehicle based on the state-of-charge.

15. A non-transitory storage medium (574) storing a sequence of instructions, which when executed by a processor (572) carry out the method of anyone of the claims 12 to 14.
